# EUROPEAN PATENT APPLICATION

(11) **EP 2 997 831 A1**
(43) Date of publication of application: **23.03.2016**
(21) Application number: 14792310.6
(22) Date of filing: 24.04.2014
(51) Int. Cl.: A23J 3/18, A23L 3/00

(54) **GLUTEN DISPERSIBILITY IMPROVER AND GLUTEN DISPERSION**

(30) Priority: 01.05.2013 JP 2013096385
(71) Applicant: Fuji Oil Holdings Inc., Osaka 598-8540 (JP)
(72) Inventor: NAKAMURA, Akihiro, Tsukubamirai-shi Ibaraki 300-2436 (JP); ADACHI, Norifumi, Tsukubamirai-shi Ibaraki 300-2436 (JP)
(74) Representative: Matthews, Derek Peter
(86) International application number: PCT/JP2014/061542
(87) International publication number: WO 2014/178321

(57) **Abstract**

[Problem to be Solved] The present invention has an object to provide a method and a material for obtaining a low viscosity gluten dispersion solution with good workability and improving the water dispersibility of a wet gluten and a vital gluten, and also to provide a method for efficiently producing a vital gluten, a gluten containing food product, and a gluten gel. [Solution] The gluten, which normally forms an agglomerate in water, can be easily dispersed in a low viscosity when mixed with a water-soluble pea polysaccharide. Using the thus prepared gluten dispersion solution, it becomes feasible to efficiently produce a vital gluten, a gluten containing food product, and a gluten gel.

## Description

### Technical Field

The present invention relates to a gluten dispersibility improver, a method for dispersing gluten in an aqueous medium, a gluten dispersion solution, and methods for producing a vital gluten and a gluten gel using the dispersion solution.

### Background Art

A gluten is a protein derived from grains such as wheat and rye and forms a distinctive gel having water retention and viscoelasticity, and was used as a raw material for yaki-fu (baked gluten), nama-fu (wet gluten), and fugashi (baked gluten confectionaries) in old times, and recently has been commonly used as an agent for expanding a volume of breads and for improving the quality of noodles and fish paste products such as kamaboko (boiled fish paste). The gluten is obtained by adding water to wheat flour, mixing and kneading to prepare a dough, which is then washed with water to rinse off the starch. The thus obtained gluten is called "wet gluten" and typically in the form of a gummy lump having a water content of 60 to 70%. The wet gluten may be frozen without further treatment and distributed in frozen state but usually distributed in dried state, and a dried and powdered product thereof is called "vital gluten".

The wet gluten has poor dispersibility in water and forms a gummy lump. For this reason, it is difficult to obtain a vital gluten by simply drying the wet gluten in an industrial scale, and many pretreatment steps are required. For example, a method in which the wet gluten is dispersed in water in advance using e.g., an inorganic acid such as hydrochloric acid or sulfuric acid or an organic acid such as acetic acid, alkali such as ammonia or sodium hydroxide, or a reducing agent, and subsequently the dispersion solution is spray-dried (spray drying method) is employed. However, the spray drying method uses acid, alkali or a reducing agent, thereby affecting the flavor and color of the gluten and also deteriorating the physical properties such as gel strength.

Alternatively, there is a flash drying method in which the wet gluten is dried in an air stream while adjusting a water content by mixing a flour composed of the vital gluten as finely cutting the wet gluten. In the case of the flash drying method, physical properties are hardly affected since drying can be achieved in a short period of time, however, it is difficult to mix the flour and the lumpy wet gluten posing a workability problem and additionally the quality deterioration is inevitable because the flour is overheated. Alternatively, a freeze drying method, in which the wet gluten is freeze-dried, is used. The freeze drying method can suppress the denaturation of the vital gluten, hardly causing changes in the color and physical properties, but has the major drawbacks of low processing ability and high drying cost. As described above, the conventional methods for producing the vital gluten raise problems on the production techniques and the quality of the vital gluten obtained, and thus the development of a method capable of producing the vital gluten with good quality at a low cost and in a simple manner has been desired.

On the other hand, the commercial vital gluten obtained via such a drying process returns to a gummy lump when hydrated and it is hence difficult to homogeneously add when processed to a food product. Typically, the vital gluten is added to a food product in the form as mixed with a flour such as wheat flour but, considering the cumbersome workability and cost, the improvement in dispersibility in water is certainly a challenge. A method of producing a powder vital gluten with improved water dispersibility obtained by adding lecithin to a wet gluten and dry-powdering the resulting mixture after emulsification, is disclosed in Patent Literature 1, however, the procedure was complicated and dispersibility of the vital gluten obtained could not be said to be sufficient.

On the other hand, a modified gluten powder containing a thickener is disclosed (Patent Literature 2). The purpose thereof is to enhance or modify the physical properties of the gluten by using a thickener and to impart texture such as firmness, stickiness or smoothness to food products containing such a powder, and the powder is obtained by kneading a thickener and a wet gluten having a water content of 60 to 70%, drying and grinding, however, is not water dispersible. Further, the method for dispersing gluten in water by adding water to a wet gluten and adding specific polysaccharides thereto and mixing therewith, is not described.

Furthermore, a modified gluten powder is obtained by adding a thickener to an acidic dispersion solution of gluten to obtain an agglomerate, drying, and subsequently grinding the agglomerate (Patent Literature 3). However, the contact of gluten and a thickener in an acidic solution for obtaining an agglomerate is set forth as the essential requirement, and a method for dispersing gluten in water in a neutral region is not suggested.

Still furthermore, it is disclosed that water-soluble soybean polysaccharides improve the water dispersibility of the gluten and further the vital gluten obtained by drying such a gluten is excellent in dispersibility in water (Patent Literature 4). However, water-soluble soybean polysaccharides may be avoided because the soybean proteins contained therein may be an allergen and additionally the flavor distinctive to soybean may affect the final product, and for this reason, a gluten dispersibility improver, which has a good flavor and expresses functions in a smaller amount, has been demanded. As described above, a method for improving the water dispersibility of a wet gluten and vital gluten without involving the deterioration of the quality and cumbersome steps is not found at present.

### Citation List

### Patent Literature

Patent Literature 1: Japanese Examined Patent Publication No. Sho-62-14253
Patent Literature 2: Japanese Patent Application Laid-Open No. 2005-204649
Patent Literature 3: Japanese Patent Application Laid-Open No. 2007-46
Patent Literature 4: WO2009/011253

### Summary of Invention

### Technical Problem

Thus, the conventional arts fail to provide a technique, which satisfies both of gluten quality and workability when producing the wet gluten and vital gluten.

An object of the present invention is to provide a method and a material for obtaining a low viscosity gluten dispersion solution with good workability and improving the water dispersibility of the wet gluten and vital gluten. Another object is to provide a method for efficiently producing a vital gluten, a gluten-containing food product, and a gluten gel.

### Solution to Problem

The present inventors conducted extensive studies on the above problems and found that water-soluble pea polysaccharides can disperse a gluten even at a low viscosity when added in a small amount, which was not achieved with conventional materials, significantly improve the water dispersibility of a gluten, and disperse a gluten satisfactorily regardless of the dispersion solution pH, and finally accomplished the present invention.

More specifically, the present invention provides
(1) a gluten dispersibility improver for a low viscosity gluten dispersion solution, containing a water-soluble pea polysaccharide,
(2) a method for dispersing a gluten in an aqueous medium, comprising mixing the gluten and the gluten dispersibility improver for a low viscosity gluten dispersion solution of (1),
(3) the method of dispersion according to (2), wherein pH of the dispersion solution having a gluten dispersed in an aqueous medium is 5 or more and 9 or less,
(4) the method of dispersion according to (2) or (3), comprising mixing the gluten and the gluten dispersibility improver for a low viscosity gluten dispersion solution of (1) so that a content of the water-soluble pea polysaccharide is 0.01 to 40 wt% based on a solid weight of the gluten,
(5) a low viscosity gluten dispersion solution, containing a water-soluble pea polysaccharide,
(6) the low viscosity gluten dispersion solution according to (5), wherein pH of the dispersion solution having a gluten dispersed in an aqueous medium is 5 or more and 9 or less,
(7) the low viscosity gluten dispersion solution according to (5) or (6), wherein a gluten concentration in the dispersion solution is 5 wt% or more and 25 wt% or less,
(8) the low viscosity gluten dispersion solution according to any one of (5) to (7), wherein the gluten and the gluten dispersibility improver for a low viscosity gluten dispersion solution of (1) are mixed so that a content of the water-soluble pea polysaccharide is 0.01 to 40 wt% based on a solid weight of the gluten,
(9) a method for producing a vital gluten, comprising drying the gluten dispersion solution of any one of (5) to (8), and
(10) a method for producing a gluten gel, comprising heating the gluten dispersion solution of any one of (5) to (8).

### Advantageous Effects of Invention

Using the water-soluble pea polysaccharides of the present invention, a dispersion solution of gluten can be easily prepared in a smaller amount added compared to the conventional materials. Further, a viscosity of the dispersion solution to be obtained is lower than that obtained by using a conventional material, and thus a gluten concentration can be more increased when producing a vital gluten, and a vital gluten can be efficiently prepared by drying such a dispersion solution, thereby, for example, leading to the significant reduction in the drying cost.

Furthermore, the vital gluten to be obtained results in good flavor, color and water dispersibility, providing favorable workability when processing the gluten to various food products, thus achieving a highly versatile gluten material.

### Description of Embodiments

### (Gluten dispersibility improver for a low viscosity gluten dispersion solution)

The gluten dispersibility improver for a low viscosity gluten dispersion solution of the present invention contains water-soluble pea polysaccharides. The gluten dispersibility improver for a low viscosity gluten dispersion solution as used herein refers to those having, for example, when a gluten concentration in the dispersion solution is 10 wt%, a viscosity of preferably 30 mPa·s or less, more preferably 25 mPa·s or less, further preferably 20 mPa·s or less, and furthermore preferably 15 mPa·s or less, at 25°C.

The gluten is a protein having glutenin and gliadin as the principal components and derived from grains such as wheat and rye. The gluten of the present invention, having somewhat different compositions depending on the kind of grain and the preparation method, encompasses those conventionally known and separated from grains by a routine method without particular limitation, however, is different from grain flours such as wheat flour containing a gluten. The gluten of the present invention may be either the wet gluten or the vital gluten obtained by drying the wet gluten, and encompasses both unless otherwise stated. Note that the vital gluten of the present invention refers to the dried gluten. On the other hand, the wet gluten of the present invention refers to those separated from grains and not subjected to the drying step, or those obtained by adding water to the vital gluten and kneading, typically with a water content of 60 to 70 wt%.

### (Water-soluble pea polysaccharides)

The water-soluble pea polysaccharides of the present invention refer to water-soluble polysaccharides extracted from a pea seed, preferably those extracted from the grain part of a pea seed, and further preferably those extracted from seeds of a yellow pea. The production method thereof can be provided, for example, in the following Production Examples which are also described in the specification of International Patent Application No. PCT/JP2012/065907.

### (Extraction)

Industrially, it is preferable that the fiber fraction, from which the protein fraction and starch fraction contained in a pea seed are removed, be used as the raw material and extracted with water. The extraction may also be carried out with hot water in lieu of water. When pH at the time of extraction is under an acid condition of pH less than 3, hydrolysis of the polysaccharides is facilitated, whereas the polysaccharide elimination decomposition is facilitated at the alkaline side of pH 12 or more, and for this reason, pH 3 to pH 12 is preferable, and pH 4 to pH 10 is particularly preferable.

Water in a 5 to 20 times amount is added to the raw material, subsequently acid or alkali is added thereto to adjust to a pH range from 3 to 12, and then water-soluble pea polysaccharides are extracted at a temperature of 60°C or more and 150°C or less, and preferably 80°C or more and 130°C or less. As an extraction temperature decreases, the extraction efficiency of polysaccharides tends to be lower. Conversely, when an extraction temperature is too high, the polysaccharides are hydrolyzed in the process of extraction, and thus the intended functions may be deteriorated in some cases. The extraction time is approximately 0.5 to 3 hours but can arbitrarily be adjusted depending on the condition of raw material, temperature, and the like.

### (Purification)

The extracted water-soluble pea polysaccharides, after separating the insoluble fiber content using a centrifugal separator, or the like, may be dried without further treatment, but it is desirable to carry out the purification such as protein removal, desalting, and pigment components removal, for further providing functions. The suitably purified water-soluble pea polysaccharides may be subjected to any disinfection treatment as necessary and used in the form of an aqueous solution, or can further be prepared as a dried product by a method such as freeze drying, spray drying, and hot-air drying of an ethanol precipitate.

### (Starch removal)

When starch remains in the fiber fraction of a pea seed, which is the raw material of water-soluble pea polysaccharides of the present invention, the water-soluble pea polysaccharides can be obtained without further treatment but it is preferable to remove starch. Starch can be removed by a method such as the decomposition using amylase. Amylase is the collective term for the enzymes which hydrolyze starch, and examples include β-amylase, α-amylase, glucoamylase, and pullulanase.

### (Molecular Mass)

The water-soluble pea polysaccharides of the present invention contain a polymer component having a molecular mass of 10000 or more as the structural component, and a fraction recognized to have a molecular mass of 10000 or more when analyzed by a gel filtration under the following conditions is defined to be the polymer component. The average absolute molecular mass (MM) is preferably 100000 to 1000000, and more preferably 200000 to 800000.

The gel filtration uses HPLC (TSK-gel G-5000PWXL: TOSOH CORPORATION, φ7.8 mm × 300 mm), and an average absolute molecular mass (MM) is determined by multi-angle laser light scattering (MALLS) calibrated with toluene after passing through the column. The analysis is carried out under the conditions of eluent: an aqueous solution of 50 mM sodium acetate (pH 5.0), flow rate: 1.0 mL/min, using an RI detector and a MALLS detector.

### (Constituent sugar)

The water-soluble pea polysaccharides of the present invention refer to those containing galacturonic acid, which is an acidic sugar, as the constituent sugar. Also, the water-soluble pea polysaccharides are those containing arabinose and galactose as the primary neutral sugars. Glucose, rhamnose, xylose and fucose may also be contained as other neutral sugars. It is preferable that the sugar composition of galacturonic acid, which is an acidic sugar, is 3 to 50 wt%. It is preferable that the sugar composition of neutral sugar is 50 to 97 wt%. Further, as the neutral sugars, it is preferable that the sugar composition of arabinose is 20 to 50 wt%, and it is preferable that the sugar composition of galactose is 10 to 30 wt%.

Note that the total sugar content of the water-soluble pea polysaccharides is measured by the phenol-sulfuric acid method, and the galacturonic acid content is measured by the Blumenkrantz method. The composition of the neutral sugars is measured by decomposing the water-soluble pea polysaccharides using sulfuric acid to monosaccharides, neutralizing the monosaccharides using barium carbonate, and subsequently subjecting to the ion chromatography method with an electrochemical detector (HPLC-PAD method). The average absolute molecular mass of the polymer component having a molecular mass of 10000 or more is calculated, after separating the component by gel filtration HPLC (TSK-gel G-5000PWXL: TOSOH CORPORATION, φ7.8 mm × 300 mm), by measuring an average absolute molecular mass (MM) by multi-angle laser light scattering (MALLS) calibrated with toluene. Note that the analysis is carried out under the conditions of eluent: an aqueous solution of 50 mM sodium acetate (pH 5.0) and flow rate: 1.0 mL/min.

The dispersibility improver for a low viscosity gluten dispersion solution containing the water-soluble pea polysaccharides of the present invention can be used regardless of the gluten form and improve the dispersibility of gluten. When a wet gluten is dispersed, for example, the wet gluten is added to and mixed with an aqueous solution of the dispersibility improver of the present invention. The vital gluten can also be dispersed in water in the same manner. Alternatively, a powder mixture of a vital gluten and the dispersibility improver can also be dispersed in water. The wet gluten or vital gluten forms an agglomerate but is not dispersed when added to and stirred in water, but can be dispersed by using the dispersibility improver of the present invention.

The gluten is a water-insoluble protein, and thus is conventionally dispersed in water using acetic acid or ammonia to enhance the water dispersibility by loosening the network. However, the dispersion solution obtained by using acetic acid has stickiness and a gluten concentration cannot be increased because of the high viscosity. Also, the gluten obtained by drying such a dispersion solution has acidic taste, bitterness, a foul smell and color changes and additionally has a reduced extensibility and elasticity required for the gluten. Unlikely, the dispersion solution obtained by using ammonia is not highly viscous, but the vital gluten obtained by drying such a dispersion solution has a foul smell, is blackish, and tends to have poor extensibility.

Thus, when the gluten is dispersed using acid or alkali, the flavor and physical properties of the gluten are deteriorated, thereby affecting the purpose of use and quality of a food product. A low viscosity and less sticky dispersion solution can be obtained by using the dispersing agent of the present invention, unlike the case where the gluten is dispersed using acid or alkali. However, the dispersibility improver of the present invention can disperse the gluten satisfactorily regardless of pH, and can also be used with acid or alkali as necessary.

The preferable amount to be used of the gluten dispersibility improver for a low viscosity gluten dispersion solution containing water-soluble pea polysaccharides of the present invention to gluten varies depending on the gluten concentration. The gluten can be satisfactorily dispersed when an amount of the water-soluble pea polysaccharides is increased in proportion to a gluten concentration in the dispersion solution. When a gluten concentration in the gluten dispersion solution is approximately 25 wt% or less, it is preferably 0.01 to 40 wt%, and more preferably 0.05 to 20 wt%, in terms of water-soluble pea polysaccharides, to a solid weight of the gluten. Within this range, the gluten can be sufficiently dispersed without being agglomerated.

The form of gluten dispersibility improver for a low viscosity gluten dispersion solution containing water-soluble pea polysaccharides of the present invention is not limited, and may be, for example, a solution or a powder. Further, the gluten dispersibility improver may contain other food product components in addition to the water-soluble pea polysaccharides as long as the effects thereof are not adversely affected, and can suitably be used with other additives. Examples of other additives include emulsifiers such as lecithin, glycerol esters of fatty acids, sucrose esters of fatty acids, and sorbitan esters of fatty acids; and oily substances such as common animal and vegetable oils and fats, and tocopherol, which is a fat-soluble vitamin; carbohydrates such as sucrose, maltose, and trehalose; polysaccharides such as sugar alcohols, dextrin, agar, carrageenan, furcellaran, tamarind seed polysaccharides, Tara gum, karaya gum, xanthan gum, sodium alginate, tragacanth gum, guar gum, locust bean gum, pullulan, gellan gum, gum arabic, hyaluronic acid, cyclodextrin, chitosan, carboxymethylcellulose (CMC), propylene glycol alginate, and various starches such as processed starches; hydrolyzates of these polysaccharides; gelatin, and albumins such as whey; proteinaceous substances such as casein sodium, soluble collagen, egg white, egg yolk powder, and soybean protein; salts such as calcium fortifiers; and pH adjusters such as sodium acetate.

### (Method for dispersing gluten in aqueous medium)

A gluten can be dispersed in an aqueous medium by mixing the gluten and the gluten dispersibility improver for a low viscosity gluten dispersion solution containing water-soluble pea polysaccharides of the present invention. When a wet gluten is dispersed in an aqueous medium, for example, the wet gluten may be added to and mixed with an aqueous solution of the water-soluble pea polysaccharides. A vital gluten can also be dispersed in an aqueous medium in the same manner. Alternatively, a vital gluten can be dispersed satisfactorily in an aqueous medium by powder mixing the vital gluten and the water-soluble pea polysaccharides. The wet gluten or vital gluten forms an agglomerate but is not dispersed when added to and stirred in an aqueous medium, but can be homogeneously dispersed by the present method.

According to the dispersion method of the present invention, the gluten can be dispersed satisfactorily without adjusting pH of an aqueous medium using acid or alkali but the use of acid or alkali is not eliminated. However, in the range from pH 5 to 9 in which the gluten is usually not dispersed sufficiently, the present method is useful.

With preferably pH of 5.3 or more, further preferably pH of 5.5 or more, and preferably pH of 8 or less, further preferably pH of 6.9 or less, the dispersing effect is high and the viscosity of dispersion solution is extremely low.

### (Gluten dispersion solution)

The gluten dispersion solution of the present invention contains water-soluble pea polysaccharides. Typically, as the gluten is not dispersed or hardly dispersed at pH 5 to 9, it is difficult to prepare the dispersion solution of this pH region. However, the dispersion solution of the present invention includes those of such a pH region, and the dispersion solution with preferably pH 5.3 or more, further preferably pH 5.5 or more, and preferably less than pH 9, more preferably pH 8 or less, and further preferably pH 6.9 or less, contains gluten dispersed satisfactorily therein and the viscosity thereof is also extremely low.

### (Method for producing vital gluten)

The method for producing the vital gluten of the present invention comprises preparing a dispersion solution of gluten containing water-soluble pea polysaccharides and drying the dispersion solution, thereby producing a vital gluten excellent in flavor, color and dispersibility. A gluten obtained by a conventionally known method can be used. Simply adding water to a gluten does not disperse a gluten but causes the formation of a gummy lump, however the gluten can be easily dispersed when water-soluble pea polysaccharides are present therewith. Further, the dispersion solution to be obtained has a lower viscosity than that of a conventional dispersion solution having a gluten dispersed using acid or alkali, and also is less sticky. A pH 4.6 dispersion solution of 10 wt% wet gluten in which the gluten is dispersed using acetic acid has a viscosity of about 500 mPa·s (25°C), whereas a dispersion solution of wet gluten in the same concentration in which the wet gluten is dispersed in an aqueous solution of 0.05 wt% water-soluble pea polysaccharides has a viscosity of about 20 mPa·s (25°C).

At the time of preparing the dispersion solution, the mixing order of a gluten, water-soluble pea polysaccharides, and water is irrelevant. For example, a gluten may be dispersed in an aqueous solution of water-soluble pea polysaccharides, water may be added to a gluten and subsequently water-soluble pea polysaccharides are added thereto and mixed to disperse the gluten satisfactorily therein. Also, in the method for producing vital gluten of the present invention, acid, alkali or a reducing agent is not necessarily used, but the use thereof is not eliminated. As long as acid or alkali is used so that the dispersion solution has preferably pH 5 or more, more preferably pH 5.3 or more, and preferably less than pH 9, and more preferably pH 8 or less, the deterioration of vital gluten quality can be suppressed.

The gluten concentration in the dispersion solution is not particularly limited, but the concentration usable in an industrial scale is preferably 25 wt% or less, more preferably 15 wt% or less, and preferably 5 wt% or more, and more preferably 10 wt% or more. Within these ranges, the viscosity is low, providing good workability and, at the same time, good drying efficiency.

The content of gluten dispersibility improver for a low viscosity gluten dispersion solution containing water-soluble pea polysaccharides of the present invention in the dispersion solution is not also particularly limited, but is preferably 0.01 to 40 wt%, and more preferably 0.05 to 20 wt%, in terms of water-soluble pea polysaccharides, to a solid weight of the gluten. Within this range, the gluten can be sufficiently dispersed without being agglomerated, and the thickening of dispersion solution caused by water-soluble pea polysaccharides can be prevented.

A vital gluten is obtained by drying such a dispersion solution, and conventionally known drying methods can be used without particular limitation, such as spray drying method, flash drying method, vacuum drying method, and freeze drying method. Of these, spray drying method and flash drying method can reduce the production cost, hence preferred. Note that the obtained vital gluten is mechanically ground as necessary, and further the particles can be arranged to be a under-sieved size.

The thus obtained vital gluten has better flavor, color and water dispersibility than those of the conventional products obtained by the spray drying method using acid, alkali, a reducing agent or the like. The vital gluten obtained by the present production method has better dispersibility than that of the conventional products, and the dispersion solution to be obtained consequently has a low viscosity with low stickiness. For example, the dispersion solution in which the vital gluten containing 0.1 wt% of water-soluble pea polysaccharides obtained by the present production method is dispersed in water so that a concentration is 10 wt% has a viscosity of about 10 mPa·s (25°C). On the other hand, the vital gluten obtained by the conventional spray drying is not dispersed even when added to water to have the same concentration but forms an agglomerate.

Thus, the dispersion solution with a lower viscosity than that of a dispersion solution obtained by using a conventional material can be prepared by the present invention, enabling the preparation of a dispersion solution having a higher gluten concentration which can significantly reduce the drying cost.

Further, when such a dispersion solution is heated, a gel having the viscoelasticity distinctive to gluten can be obtained. More specifically, the vital gluten of the present invention is easily dispersed in water, and the dispersion solution is easy to handle due to the low viscosity. The vital gluten also forms a gel having the viscoelasticity originated from gluten when heated and thus can be used for various food products as always has been, hence being excellent.

### (Method for producing a gluten gel)

The method for producing a gluten gel of the present invention comprises preparing a dispersion solution of gluten containing water-soluble pea polysaccharides, and heating the dispersion solution to gelatinize the gluten. The gluten gel of the present invention has the gluten separated from grains as the principal component, and provides the viscoelastic texture derived from the gluten gel. Specific examples include nama-fu (wet gluten), age-fu (fried nama-fu), fu-manju (gluten bun), yaki-fu (baked gluten) obtained by adding wheat flour, baking powder, or glutinous rice flour to gluten, and kneading and toasting the mixture, and gluten meats. The gluten may be any of wet gluten prepared from grains, vital gluten, or wet gluten obtained by kneading the vital gluten with water.

Other raw materials can be added as desired to the gluten dispersion solution in addition to the water-soluble pea polysaccharides as long as the dispersibility is not adversely affected. The gluten concentration in the dispersion solution is not particularly limited, and preferably 5 wt% or more, more preferably 10 wt% or more, and preferably 35 wt% or less, and more preferably 25 wt% or less. Within these ranges, the dispersion solution has fluidity, hence is easily molded, and the texture distinctive to the gluten gel is provided. The heating temperature is not particularly limited and typically 60 to 70°C or higher at which the gluten starts to denature. The dispersion solution is molded by being filled in a mold, or the like, as necessary and heated. The heating method of dispersion solution is not also particularly limited and may be steam heating, boiling, frying, or baking, as long as the inside is heated. The dispersion solution has fluidity before heated but the gluten is gelatinized by heating, whereby the gluten gel having the elastic texture distinctive to gluten is obtained.

For the preparation of a gluten gel, it is difficult to mold because of the poor fluidity caused by the viscoelasticity distinctive to the gluten. For this reason, when a fu-manju is produced, a sweet rice flour, or the like, is added to and kneaded with a gluten to prepare a dough, which is then torn, molded, and steamed with heating. The viscoelasticity of dough makes the press molding difficult and the bun must still be manually produced by craftsman, failing to achieve the continuous production. However, according to the method for producing a gluten gel of the present invention, the preparation of the dispersion solution is easy and, in addition, the continuous process from molding to heating is enabled.

Next, the measurement methods used in the present invention are described.

### (Viscosity of gluten dispersion solution)

A viscosity at 25°C immediately after gluten is homogeneously dispersed in water of a 10 weight times of a dry weight of gluten is measured using a rotating viscometer (manufactured by TOKIMEC Inc.).

### Examples

Hereinafter, embodiments of the present invention are described with reference to Examples, but they are only examples and the spirit of the present invention is not limited thereto. Note that, in Examples, all % refer to the weight basis.

### (Production Example of water-soluble pea polysaccharides)

After threshing 50 kg of pea seeds, water in a 5 times amount was added and the seeds were immersed therein. The seeds were crushed using a homomixer (5000 rpm, 30 minutes), whereby proteins and starches were extracted. The components such as proteins and starches dispersed in water were removed using a centrifugal filter at 1500 × g for 20 minutes, thereby collecting the fiber. Further, water in a 5 times amount was added to the fiber and stirred using a homomixer (3000 rpm, 30 minutes), thereby collecting the fiber using a centrifugal filter (1500 × g, 20 minutes). The procedure was repeated twice and the fiber was freeze-dried, thereby obtaining 10 kg of the pea fiber. 80 parts of the pea fiber was dispersed in 920 parts of water, pH was adjusted to 5 using hydrochloric acid, and the dispersion solution was then heated at 120°C for 90 minutes, thereby extracting water-soluble pea polysaccharides. Amylase (Fungamyl: manufactured by Novozymes A/S) equivalent to 0.2 parts to 100 parts of the pea fiber was added to the extract to decompose the starch, and subsequently the insoluble fiber was removed using a centrifugal separator (5000 rpm, 30 minutes), thereby collecting the supernatant. Ethanol was added to the supernatant to give a concentration of 60 wt% to precipitate the water-soluble pea polysaccharides, the precipitate was purified using 90 wt% water-containing ethanol, and the obtained precipitate was dried in air, thereby obtaining water-soluble pea polysaccharides A.

**(Table 1) Sugar composition and average absolute molecular mass**

| | Sugar composition (%) | | | | | | | Total sugar content | Average absolute molecular mass |
|---|---|---|---|---|---|---|---|---|---|
| | GalA | Ara | Gal | Glc | Rha | Xyl | Fuc | | |
| Water-soluble pea polysaccharides A | 16.8 | 40.6 | 22.4 | 6.2 | 6.4 | 7.3 | 0.3 | 92.6 | 800,000 |

| | | | | | | | | | |
|---|---|---|---|---|---|---|---|---|---|
| GalA galacturonic acid, Ara arabinose, Gal galactose, Glc glucose, Rha rhamnose, Xyl xylose, Fuc fucose | | | | | | | | | |

Water-soluble pea polysaccharides A contained galacturonic acid as the constituent sugar and the neutral sugars of arabinose and galactose as the major constituent sugars. The average absolute molecular mass was 800000, which was a polymeric polysaccharide.

### (Example 1: Vital gluten containing water-soluble pea polysaccharides)

Using water-soluble pea polysaccharides A as the gluten dispersibility improver for a low viscosity gluten dispersion solution, 1.5 kg of a wet gluten (water content 67%) prepared from wheat flour was added to 3.5 kg of distilled water containing 0.05% of A, and homogeneously dispersed using a homodisper (Tokushu Kika Kogyo Co., Ltd.). The gluten was dispersed satisfactorily, and the obtained dispersion solution had a low viscosity. Subsequently, the dispersion solution was fed with stirring to a spray drying apparatus, thereby obtaining a vital gluten.

### (Comparative Example 1: Vital gluten containing water-soluble soybean polysaccharides)

A vital gluten was obtained exactly in the same method as in Example 1, with the exception that water-soluble soybean polysaccharides ("Soya Fibe-S" / FUJI OIL CO., LTD.) were used in lieu of the water-soluble pea polysaccharides A.

### (Comparative Example 2: Vital gluten obtained by using acetic acid)

A dispersion solution was adjusted to pH 4.6 using an aqueous solution of acetic acid in lieu of an aqueous solution of the water-soluble pea polysaccharides A used in Example 1. The dispersion solution was consistent having a viscosity of about 500 mPa·s. If the dispersion solution was used directly, a drying efficiency at the time of spray drying is reduced and hence water was added to a concentration of 8 wt%, at which a viscosity of the dispersion solution was about 100 mPa·s. A vital gluten was obtained exactly in the same method, except what was described above.

### (Comparative Example 3: Vital gluten obtained by using ammonia)

A dispersion solution was adjusted to pH 9.3 using an aqueous solution of ammonia in lieu of the aqueous solution of acetic acid used in Comparative Example 2. A vital gluten was obtained exactly in the same method, except what was described above.

### (Control Group 1)

The same wet gluten as in Example 1 was freeze-dried, subsequently ground, and sieved, thereby obtaining a vital gluten.

The vital glutens obtained in Example 1, Comparative Examples 1 to 3, and Control Group 1 were each added to distilled water with stirring to give a concentration of 10%, thereby evaluating the water dispersibility. Next, the vital gluten was added to distilled water to give a concentration of 35% to be made to become like a wet gluten, and 7 panelists conducted a sensory evaluation on flavor, color and gel physical properties. The results are shown in Table 2.

The criteria for water dispersibility evaluation of the vital glutens are also shown in Table 3. The gel physical property having viscoelasticity was considered good, and evaluated based on Control Group 1.

**(Table 2)**

| | | | Example 1 | Comparative Example 1 | Comparative Example 2 | Comparative Example 3 | Control Group 1 |
|---|---|---|---|---|---|---|---|
| In-dispersion solution preparation method (Solution added preparation method) | | Water-soluble pea polysaccharides | 0.05% Solution | - | - | - | - |
| | | Water-soluble soybean polysaccharides | - | 0.05% Solution | - | - | - |
| | | Acetic acid | - | - | Adjusted to pH 4.6 | - | - |
| | | Ammonia | - | - | - | Adjusted to pH 9.3 | - |
| Wet gluten | Properties of 10% dispersion solution | Dispersibility | 4 | 4 | 4 | 4 | 1 |
| | | pH | 6.5 | 6.5 | 4.6 | 9.3 | - |
| | | Viscosity (mPa·sec) | 18 | 24 | 530 | 80 | - |
| Vital gluten | Properties of 10% dispersion solution | Dispersibility | 4 | 4 | 2 | 2 | 1.5 |
| | 35% Gluten | Dispersibility | 1 | 1 | 1 | 1 | 1 |
| | | Flavor | A | B | C: foul taste, foul smell | C: Foul smell | A |
| | | Color | A | A | B: Slightly yellow | D: Yellow | A |
| | | Gel physical properties | A | B Slightly low elasticity | D Low stickiness, low elasticity | D Low stickiness | A |

| | | | | | | | |
|---|---|---|---|---|---|---|---|
| Flavor evaluation/Color evaluation/Gel physical properties: A Very good, B Good, C Rather poor, D Very poor | | | | | | | |

**(Table 3)**

| Water Dispersibility Evaluation Criteria | |
|---|---|
| 4: | Free of agglomerates, readily dispersed |
| 3: | Dispersed but gluten agglomerates are partially noted |
| 2: | Many gluten agglomerates are noted, hardly dispersed |
| 1: | A gummy lump is formed, not dispersed at all |

When the water-soluble pea polysaccharides of Example 1 were added, the wet gluten was dispersed satisfactorily at a neutral pH, providing a low viscosity dispersion solution, and the vital gluten was obtained more efficiently by spray drying. Further, the obtained vital gluten was free of a foul smell and had a good color. Furthermore, the vital gluten, when added to and mixed with water to give a concentration of 10%, was dispersed satisfactorily. The vital gluten, when added to water to give a concentration of 35%, became like an elastic wet gluten. The obtained gluten had a good flavor and color with the texture distinctive to gluten despite a lightly lower viscoelasticity compared with Control Group.

When the water-soluble soybean polysaccharides of Comparative Example 1 were added, the wet gluten was dispersed satisfactorily at a neutral pH but the dispersion solution had a higher viscosity than Example 1. A vital gluten was also obtained despite poorer spray properties at the time of spray drying than Example 1. The obtained vital gluten was free of a foul smell and had a good color despite a slight soybean flavor noted. Further, the vital gluten, when added to and mixed with water to give a concentration of 10%, was dispersed but poorer than Example 1. The vital gluten, when added to water to give a concentration of 35%, became like an elastic wet gluten. The obtained gluten had a poorer flavor than Example 1 but had a good color with the texture distinctive to the gluten, despite the lower viscoelasticity compared with Control Group.

Thus, when the water-soluble pea polysaccharides were used in the system where a gluten concentration is 10% in the dispersion solution, the viscosity was reduced by 25% compared with the case where the water-soluble soybean polysaccharides were used, consequently achieving a significant improvement in workability of the dispersion solution.

The gel containing 35 wt% of the vital gluten of Comparative Example 2 had a foul smell, developed a slightly acidic taste, and showed discoloration of a reddish color. The gel was low in both stickiness and elasticity, and soft.

Likely, the gel containing 35 wt% of the vital gluten obtained in Comparative Example 3 had an intense foul smell, and developed a color with yellow to reddish discoloration. The gel also had a low stickiness

The wet gluten of Control Group 1 was added to water to give a concentration of 10% but was not dispersed at all and formed an agglomerate. The vital gluten also had strong aggregability and was hardly dispersed in water, hence failing to prepare a 10% dispersion solution.

### (Example 2: Comparison of vital gluten water dispersibility by the amount of water-soluble pea polysaccharides added)

The effective concentration of water-soluble pea polysaccharides for gluten dispersion was checked. Water-soluble pea polysaccharides were added to distilled water at 20°C and stirred, thereby obtaining a solution. Note that the concentration of dispersibility improver shown in Table 4 was expressed by wt% when the vital gluten was 100 wt%. The vital gluten (a solid content 95.5%) obtained in Control Group 1 was added thereto to give a concentration of 10 wt% while stirring (500 rpm) using a three one motor (SHINTO Scientific Co., Ltd.), thereby evaluating the dispersibility of the gluten. The dispersibility was evaluated based on the criteria shown in Table 3. Further, of the 10% vital gluten dispersion solutions, those recognized to have the dispersibility were measured for the median diameter of gluten particles using SALD-2000A (Shimadzu Corporation). The result of the comprehensive evaluation based on the 3 items of dispersibility, viscosity and median diameter was defined as overall evaluation. The results are shown in Table 4.

### (Comparative Example 4: Comparison of vital gluten water dispersibility by the amount of water-soluble soybean polysaccharides added)

The water dispersibility of the vital gluten was evaluated exactly in the same manner as in Example 2, with the exception that water-soluble soybean polysaccharides were used in lieu of the water-soluble pea polysaccharides. The results are shown in Table 4.

### (Control Group 2: Water dispersibility of vital gluten)

The water dispersibility of the vital gluten was evaluated without adding the dispersibility improver unlike in Example 2. The results are shown in Table 4.

**(Table 4)**

| | | Example 2 | | | | | | | Comparative Example 4 | | | | | | | Control Group 2 |
|---|---|---|---|---|---|---|---|---|---|---|---|---|---|---|---|---|
| Kind of additive | Water-soluble pea polysaccharides A (%) | 0.005 | 0.01 | 0.05 | 0.1 | 1 | 5 | 10 | - | - | - | - | - | - | - | - |
| | Water-soluble soybean polysaccharides (%) | - | - | - | - | - | - | - | 0.005 | 0.01 | 0.05 | 0.1 | 1 | 5 | 10 | - |
| Evaluation result | Dispersibility | 3 | 4 | 4 | 4 | 4 | 4 | 4 | 1.5 | 2 | 3 | 4 | 4 | 4 | 4 | 1.5 |
| | Viscosity (mPa·sec) | 38.5 | 10.5 | 9.0 | 9.0 | 8.5 | 8.5 | 13.5 | 38.5 | 30.5 | 27.5 | 18.5 | 9.5 | 10.5 | 26.5 | - |
| | Median diameter (µm) | 184 | 85 | 40 | 25 | 34 | 41 | 45 | 295 | 284 | 117 | 74 | 65 | 28 | 42 | - |
| | Overall evaluation | D | B | A | A | A | A | A | D | D | C | A | A | A | A | D |

| | | | | | | | | | | | | | | | | |
|---|---|---|---|---|---|---|---|---|---|---|---|---|---|---|---|---|
| Overall evaluation: A Very good, B Good, C Rather poor, D Very poor | | | | | | | | | | | | | | | | |

The results shown in Table 4 revealed that the water-soluble pea polysaccharides dispersed the vital gluten satisfactorily in an amount added of 0.01% or more. On the other hand, the water-soluble soybean polysaccharides caused slightly insufficient dispersion and the formation of a gummy lump in an amount added of 0.05% or less, but dispersed the vital gluten satisfactorily in an amount added of 0.1% or more. Satisfactory dispersibility was achieved by increasing an amount of the dispersibility improver depending on the gluten concentration. When an amount added was too large, a viscosity of dispersion solution tends to increase but, when an amount added was adjusted, the dispersion solution with good dispersibility and a low viscosity was obtained.

These results verified that the water-soluble pea polysaccharides can satisfactorily disperse the vital gluten in a lower viscosity in a smaller amount added compared to the water-soluble soybean polysaccharides.

### (Example 3: Fish meat sausage)

44 g of salt, 220 g of lard, 60 g of sugar, 36 g of seasoning, 140 g of cornstarch, and 40 g of the vital gluten obtained in Example 1 were dispersed in 880 g of chilled water and added to 2000 g of minced Alaska pollock, and mixed using a silent cutter, thereby obtaining a fish meat paste. Subsequently, the obtained fish meat paste was packed in a casing, sealed, and braised at 95°C for 20 minutes. Then, cooling was carried out in chilled water and the paste was stored in a refrigerator overnight to carry out the sensory evaluation.

### (Comparative Example 5)

A fish meat sausage was obtained exactly in the same manner as in Example 3, with the exception that the vital gluten obtained in Comparative Example 1 was used.

### (Control Group 3)

The vital gluten obtained in Control Group 1 was directly added in the form of powder since it was not dispersed in water. A fish meat sausage was obtained exactly in the same manner as in Example 3, except what was described above.

### (Sensory Evaluation Method)

7 Panelists carried out the sensory evaluation on the texture (elasticity) and flavor of the fish meat sausages of Example 3, Comparative Example 5, and Control Group 3. The evaluation was carried out on a 5 scale, using Control Group 3 as a standard, and as the larger the numerical value is, the better the texture of the fish meat sausage is. The results are shown in Table 5.

**(Table 5)**

| | Example 3 | Comparative Example 5 | Control Group 3 |
|---|---|---|---|
| Vital gluten | Example 1 Water-soluble pea polysaccharides | Comparative Example 1 Water-soluble soybean polysaccharides | Control Group 1 No additive |
| Texture (Elasticity) | 5.0 | 4.5 | 1.0 |
| Flavor | 5.0 | 5.0 | 5.0 |

The fish meat sausage to which the vital gluten containing the water-soluble pea polysaccharides was added in Example 3 developed good texture having the elasticity substantially equivalent to that of Control Group 3, and with respect to flavor, was free of a foul smell as in Control Group 3 and developed a good flavor. On the other hand, the fish meat sausage of Comparative Example 5 to which the vital gluten containing the water-soluble soybean polysaccharides was added had slightly poorer elasticity than that of Control Group 3, deteriorating the texture, however, with respect to the flavor, was free of a foul smell as in Control Group 3 and developed a good flavor. The vital glutens of Example 3 and Comparative Example 5 were dispersible in chilled water and added to the fish meat paste, whereby the powder was not scattered and hence the equipment and floor of workspace were free from dusts, whereas in Control Group 3, the powder was notably scattered, posing sanitary problems.

## Claims

1. A gluten dispersibility improver for a low viscosity gluten dispersion solution, containing a water-soluble pea polysaccharide.

2. The gluten dispersibility improver for a low viscosity gluten dispersion solution according to Claim 1, wherein the low viscosity gluten dispersion solution has a viscosity of 30 mPa·s or less at 25°C when a gluten concentration in the dispersion solution is 10 wt%.

3. A method for dispersing a gluten in an aqueous medium, comprising mixing the gluten and the gluten dispersibility improver for a low viscosity gluten dispersion solution of Claim 1.

4. The method of dispersion according to Claim 3, wherein pH of the dispersion solution having a gluten dispersed in an aqueous medium is 5 or more and 9 or less.

5. The method of dispersion according to Claim 3, wherein pH of the dispersion solution having a gluten dispersed in an aqueous medium is 5.3 or more and 8 or less.

6. The method of dispersion according to Claim 3, comprising mixing the gluten and the gluten dispersibility improver for a low viscosity gluten dispersion solution of Claim 1 so that a content of the water-soluble pea polysaccharide is 0.01 to 40 wt% based on a solid weight of the gluten.

7. The method of dispersion according to Claim 3, comprising mixing the gluten and the gluten dispersibility improver for a low viscosity gluten dispersion solution of Claim 1 so that a content of the water-soluble pea polysaccharide is 0.05 to 20 wt% based on a solid weight of the gluten.

8. A low viscosity gluten dispersion solution, containing the gluten dispersibility improver for a low viscosity gluten dispersion solution of Claim 1.

9. The low viscosity gluten dispersion solution according to Claim 8, wherein pH of the dispersion solution having a gluten dispersed in an aqueous medium is 5 or more and 9 or less.

10. The low viscosity gluten dispersion solution according to Claim 8, wherein pH of the dispersion solution having a gluten dispersed in an aqueous medium is 5.3 or more and 8 or less.

11. The low viscosity gluten dispersion solution according to Claim 8, wherein a gluten concentration in the dispersion solution is 5 wt% or more and 25 wt% or less.

12. The low viscosity gluten dispersion solution according to Claim 8, wherein the gluten and the gluten dispersibility improver for a low viscosity gluten dispersion solution of Claim 1 are mixed so that a content of the water-soluble pea polysaccharide is 0.01 to 40 wt% based on a solid weight of the gluten.

13. The low viscosity gluten dispersion solution according to Claim 8, wherein the gluten and the gluten dispersibility improver for a low viscosity gluten dispersion solution of Claim 1 are mixed so that a content of the water-soluble pea polysaccharide is 0.05 to 20 wt% based on a solid weight of the gluten.

14. A method for producing a vital gluten, comprising drying the gluten dispersion solution of Claim 8.

15. A method for producing a gluten gel, comprising heating the gluten dispersion solution of Claim 8.
